# EUROPEAN PATENT APPLICATION

(11) **EP 1 995 846 A2**
(43) Date of publication of application: **26.11.2008**
(21) Application number: 08014966.9
(22) Date of filing: 12.09.2006
(51) Int. Cl.: H02K 1/16, H02K 1/12, H02K 15/02, H02K 35/02, F03B 13/14

(54) **Tubular electrical machines**

(30) Priority: 22.09.2005 GB 0519355
(62) Divisional of application: 06076707.6
(71) Applicant: Converteam Ltd, Rugby Warwickshire CV21 1BU (GB)
(72) Inventor: Le Flem, Grahame, Rugby, Warwickshire CV23 0SU (GB)
(74) Representative: Serjeants

(57) **Abstract**

The present invention provides a stator (20) for a tubular electrical generator or motor having a substantially cylindrical inner surface (24) containing a series of axially-spaced slots (26) for receiving the coils (28) of a stator winding. The stator is formed from a plurality of stacked annular laminations (40; 40') that define the slots (26) and the inner surface (24). The laminations comprise circumferentially-spaced radial slits (48) defining fingers (50) that extend radially outwards from their radially inner edges (42; 42'). The slits and fingers reduce the overall eddy losses in the stator (20) whilst permitting simple manufacture, simple assembly and high radial thermal conduction for good cooling. In an alternative embodiment, the laminations and their fingers may be replaced by layers of batons of similar radial extent to the laminations.

## Description

### Technical Field

The present invention relates to tubular electrical machines, and in particular to physically large tubular electrical motors and generators that are suitable for use as direct drive generators for converting wave energy into electrical power.

### Background Art

It is known to use linear electrical machines as generators to convert the reciprocating movement captured by a wave energy machine into electrical power.

Tubular electrical machines are similar to linear electrical machines but instead of having a flat stator they have a tubular stator where the slots for receiving the coils of the stator winding are formed in the cylindrical inner surface. The flat translator is replaced with a hollow or solid tubular translator with rows of permanent magnets mounted around its cylindrical outer surface.

Tubular electrical machines offer considerable benefits over linear electrical machines because the tubular structure of the stator is inherently strong. However, a main drawback and limitation of their use in large physical sizes is the need to control eddy currents in the core of the stator. If the flux is considered to flow through the stator of a linear electrical machine in a longitudinal direction then the stator is ideally formed from a series of laminations stacked against each other in the transverse direction that is parallel to the slots for the coils of the stator winding. However, normal laminations stacked in this manner would allow eddy currents to flow and prevent the tubular electrical machine from operating. The inability to control eddy currents has so far prevented the development of tubular electrical machines having the physical size and rating that would enable them to be used as a direct drive generator for large-scale wave energy machines.

On small tubular electrical machines with intermittent operation, such as those used for opening sliding doors, for example, the problem of eddy currents can be overcome by using amorphous stator cores. The magnetic permeability and thermal conductivity of such amorphous stator cores are poor compared to the conventional laminations used in the flat stators of linear electrical machines and they can only be produced in small physical sizes.

United States Patent 5382860 proposes a solution to the problem of eddy currents in tubular electrical machines by forming the stator core from groups of circumferentially abutting laminations which collectively define a bore of the stator core and a perimeter. Wedges are positioned between adjacent pairs of the lamination groups to provide a continuous path around the perimeter. Although the laminations are mounted in the correct plane to reduce eddy currents, the proposed solution makes construction of the stator very difficult because of the need for the lamination groups and the wedges to be mechanically connected together. It is also difficult to restrain the lamination groups in the axial direction to ensure that the stator core can resist the large axial forces that act on it when the tubular machine is operating.

A further solution is to eliminate the stator core completely and use an air-cored stator. However, this leads to very high magnetising requirements and is simply not economical for most practical purposes.

### Summary of the Invention

The present invention seeks to overcome the problem of eddy currents by providing a stator for a tubular electrical machine having a substantially cylindrical inner surface containing a series of axially-spaced slots for receiving the coils of a stator winding, wherein the stator comprises axially successive laminations stacked together such that radially inner edges of the laminations define the slots and the inner surface of the stator, the laminations comprising circumferentially-spaced fingers extending radially outwardly from their radially inner edges.

The tubular construction of the stator offers several advantages over a linear construction. First of all, the resulting stator has inherent mechanical strength and rigidity arising from its tubular shape so that it can better withstand the forces that act on it when the tubular electrical machine is operating. The length of the stator for a tubular electrical machine can also be much less than the flat stator for a linear electrical machine of equivalent rating. This is because the coils of the stator winding of a tubular electrical machine are annular and there are no endwindings. More particularly, the tubular construction means that the effective length of the stator winding is longer (being approximately the inner diameter of the stator core multiplied by π) so the axial length of the stator can be substantially reduced while still providing the same air gap area as the linear electrical machine.

The laminations are stacked in the axial direction in a similar way to those of a conventional rotary electrical machine and it is preferred that at least the laminations constituting the region of the stator containing the stator winding comprise the above-mentioned fingers. These fingers can be defined by means of circumferentially-spaced slits extending radially out from the radially inner edges of the laminations.

The outer surface of the stator is preferably also substantially cylindrical. However, both of the inner and outer surfaces of the stator, and the end surface of the axially-spaced slots, can be a reasonably close polygonal-approximation to cylindrical and the claims should be interpreted accordingly.

The stator is preferably formed from annular laminations having a radially inner edge and a radially outer edge. It is generally preferred that each of the annular laminations comprise a plurality of segments that are abutted together along their radial edges. The laminations can be stacked such that axially adjacent segments are staggered in the circumferential direction with respect to each other. This prevents the join lines between the radial edges of the individual segments from being axially aligned through the stator and improves its mechanical strength and rigidity. The laminations may have different radial lengths so that the series of annular slots can be formed at axial intervals along the substantially cylindrical inner surface of the stator. In other words, the stator can be formed from a first set of stacks of annular laminations having a first radial length such that their radially inner edges together define the substantially cylindrical inner surface of the stator and a second set of stacks of annular laminations having a second radial length that is less than the first radial length such that their radially inner edges define radially inner surfaces of the axially-spaced slots for receiving the coils of the stator winding. Stacks in the first and second sets are alternated with each other until the stator has the desired number of annular slots in its substantially cylindrical inner surface. The axial height and radial length of each slot will depend on the size of the coils of the stator winding.

The number of annular laminations in the stacks will depend on the thickness of the laminations and the desired axial heights of the slots and the regions of the stator between adjacent slots. For example, if the laminations are 1.0 mm thick and the axial height of the region of the stator between a selected pair of slots is about 20 mm then the number of annular laminations in this particular stack will be about 20. If the axial height of a particular slot is about 18 mm then the number of annular rings in this particular stack will be about 18. However, not all of the annular laminations need to have the same thickness.

Cut-out regions or gaps can be formed in or between selected laminations to provide radially-extending passages for the connections to the stator winding on the outer periphery of the stator core. The cut-out regions or gaps allow the coil connections to pass through to the outside of the stator where they can be run to a terminal unit or a power converter, for example.

The radially outer edges of selected laminations can also be provided with cut-out regions, so that when all of the laminations are stacked on top of each other during the assembly of the stator, the cut-out regions in the selected laminations together define at least one axially-extending channel in the outer surface of the stator for receiving the coil connections. The number of axially-extending channels can depend on the number of phases of the tubular electrical machine. For example, if the tubular electrical machine is designed for three-phase operation then the outer surface of the stator may include three separate axially-extending channels for receiving the coil connections associated with each of the phases. Alternatively, all of the coil connections can be received in a single channel. In practice, the stator may be surrounded by a protective casing or outer housing and the channels are therefore provided between the outer surface of the stator and the inner surface of this casing.

The casing may have a good thermal conductivity so that the stator can be cooled by conduction of heat out through the casing. In one practical embodiment where the present invention is used as a direct drive generator for a wave energy machine, the casing can be surrounded by sea water so that the heat generated in the stator core and windings can be conducted directly out through the casing to the sea water, which acts as an infinite heat sink.

Each of the individual laminations is formed from a suitable type of lamination steel as known in conventional rotating electrical machines and coated with a suitable insulating coating or film. The laminations can be stamped out from planar lamination steel using conventional manufacturing techniques. The laminations are typically between about 0.5 mm and about 2.0 mm thick but in practice this will depend on the operating parameters of the tubular electrical machine and the choice of the manufacturing method.

The circumferentially-spaced slits in the radially inner edges of the laminations are preferably formed using conventional punching methods or laser cutting, depending on cost considerations. However, any other suitable cutting or machining process can be used depending on the circumferential width and the radial length of the individual slits. The slits extend from the radially inner edge of each lamination and preferably extend along a radius of the lamination towards the radially outer edge. However, the slits do not extend all the way to the radially outer edge so that each lamination has a slotted region with a series of circumferentially-spaced fingers (that is the parts of the lamination that lie between adjacent pairs of slits) and a support region that is not slotted but which can contain a series of circumferentially-spaced apertures for receiving locking pins or bolts that are passed through the stator to hold the stacks together.

The circumferential width and the radial length of the individual slits, and the circumferential width of the individual fingers, will depend on a variety of factors such as the physical size of the stator and the operating frequency, pole number, pole pitch and flux density of the tubular electrical machine. The circumferential length of the fingers can also be thought of as the circumferential distance between each adjacent pair of slits. For a stator having an inner diameter of about 1500 mm and an outer diameter of about 2000 mm then a typical value for the circumferential width and radial length of the slits might be about 1 to 3 mm and 170 mm, respectively. The circumferential width of the slits will depend to a certain extent on the most cost effective manufacturing process to produce narrow deep slits. For laminations whose radially inner edges form part of the substantially cylindrical end surface of the axially-spaced slots then the radial length of the slits (and hence the radial length of the individual fingers) will be reduced by an amount equal to the desired radial depth of the slots that contain the coils of the stator winding. It will be readily appreciated that the reduction in the radial length of the slits results from a reduction in the overall radial length of the laminations as a whole and not simply by making the slits shorter.

An important consideration in determining the radial length of the slits (and hence the radial length of the fingers of each lamination) is the fact that at a certain radial distance away from the radially inner edge of the laminations the amount of flux flowing in the stator falls off quite considerably. Since the purpose of the slits is to reduce the eddy currents then there is no need for the slits to extend into the region of the laminations where there is no significant flux. This means that the structural integrity of each individual lamination can be maintained by providing the support region mentioned above. The circumferential width of the fingers should be such that the overall eddy current losses of the stator are within predetermined limits. This will be described in more detail below.

For ease of manufacture it is generally preferred that all the individual slits on each lamination have the same circumferential width, and that all individual fingers on each lamination have the same circumferential width. But this is not a strict requirement and each lamination can include slits and fingers of different widths if this further reduces the eddy current losses in the stator. The length and/or width of the individual slits and individual fingers may also vary between laminations. For example, certain radial or axial locations within the stator may have higher or lower predicted eddy current losses and the dimensions of the slits and the fingers of the laminations can be tailored accordingly.

The coils of the stator winding are inserted into the series of axially-spaced slots as the laminations are stacked on top of each to form the assembled stator. For example, with reference to the first and second sets of stacks of annular laminations mentioned above, it will be readily appreciated that a first coil will be inserted in the slot, so that it lies on top of the part of a stack in the first set that extends radially inwardly of a stack in the second set, before another stack in the first set is placed on top of the stack in the second set. The stator is therefore built up by alternating the stacks of laminations from the first and second sets in axial sequence and inserting the coils appropriately.

The coils are preferably of a simple circular section with two spiral wound tiers mounted side by side in the annular slots. One tier is wound in one rotation and the other tier is wound with the opposite rotation, so that when they are placed side by side and connected together they will both carry current in the same direction. The coils are therefore simple to make and assemble. The number of axially-spaced slots in the substantially cylindrical surface of the stator will depend on the pole number of the tubular electrical machine and the number of coils per pole.

The radially inner edges of the laminations that overhang the slots can be supported by an annular ring of non-magnetic insulating material provided in each slot next to the associated coil. The insulating material is preferably located on the radially inner side of the associated coil and mechanically supports the individual fingers against being flexed or bent in the axial direction by the flux in the stator during the operation of the tubular electrical machine.

Clamp plates can be placed at both ends of the assembled stator and locking pins or bolts can be inserted through the apertures in the support region of the laminations to compress the stacks between the clamp plates and provide a rigid support for the mechanical loads. The clamped stator is then preferably placed in a sealed tank where it undergoes a Vacuum Pressure Impregnation (VPI) process. More particularly, the stator is subjected to a vacuum before resin is pumped into the assembly. The stator is then cured at an elevated temperature (typically about 180° C) for a period of time to set the resin. After the VPI process has been carried out, the stator is essentially an integral structure with the various stacks of laminations bonded together and insulated by the cured resin. The stator therefore has a high degree of structural rigidity and is able to withstand the mechanical forces that it experiences during the normal operation of the tubular electrical machine.

The flux in the stator of a tubular electrical machine flows axially through the stacked laminations. However, without the addition of the slits/fingers in the radially inner edges of the laminations, it will be appreciated that eddy currents would be able to circulate freely in the circumferential direction within the plane of the laminations where they would cause unacceptably high losses. By forming the slits/fingers in the radially inner part of the laminations where the flux travels easily, the eddy currents are restricted to circulate within the individual fingers instead of within the lamination as a whole. This results in a dramatic reduction in eddy current losses.

Eddy current losses are proportional to the frequency squared. This means that eddy current losses can also be reduced by lowering the operating frequency of the tubular electrical machine, by using a low pole number, for example.

Because the individual fingers of the laminations extend in the radial direction, any heat generated in the slotted and support regions of the laminations can be easily conducted straight out to the protective casing or outer housing mentioned above. In other words, the addition of the series of slits in the radially inner edge of the laminations does not have a negative impact on the thermal conductivity of the laminations and hence on the stator as a whole.

A tubular electrical machine includes a stator preferably as described above, a stator winding having a series of coils received in the series of axially-spaced slots contained in the substantially cylindrical inner surface of the stator, and a translator located inside the stator and spaced apart from its substantially cylindrical inner surface by an air gap.

The translator may be formed as a substantially cylindrical steel shaft machined to accommodate permanent magnets over its outer surface. The shaft can be made as a single piece or made up of sections that are mechanically secured together to form the required length of the complete translator. The magnets can be secured using adhesive or mechanical fixings such as screws. The magnets are arranged in axial rows of alternating polarity. Each of the magnets forming a complete row of magnets may be skewed in the axial direction. This reduces the cogging force due to the change in reluctance from one translator position to the next as the magnets move in and out of line with the slots in the inner surface of the stator. The magnets can be shaped to profile the air gap radius on the outer surface of the translator or can be flat for reasons of cost.

The translator does not need to be of the permanent magnet type and can be of an induction, reluctance, or solid salient pole type with wound field coils. However, the permanent magnet type is advantageous because it does not require any electrical connections to the translator and will generate voltages without requiring a shaft encoder. The tubular electrical machine can work in both motoring and generating modes. If the tubular electrical machine is used as a direct generator for a wave energy machine then it will be operating predominantly in a generating mode so that the relative movement between the translator and the stator induces an electrical current in the coils of the stator winding. However, it can also be made to operate in a motoring mode for a part of the movement cycle by supplying electrical current to the stator winding. This can improve the function of the tubular electrical machine as a direct generator because it enables inertia compensation to be artificially included in the resonant system to tune the tubular generator to a wider range of wave frequencies and extract more useful electrical power from a given wave.

The tubular electrical machine may also include a bearing to maintain the radial spacing between the stator and the translator as they move relative to each other in the axial direction. The bearing can be a magnetic bearing or it can include a bearing member that contacts an axially-extending bearing surface provided on the outer surface of the translator. For example, the bearing member can be a rotatably mounted roller or wheel or a low-friction pad (optionally made of a composite dry-lubricated material) that cooperates with the bearing surface. At least two regions of the outer surface of the translator can be covered with permanent magnets and the regions are separated by the bearing surface.

It is generally preferred that a number of bearings are circumferentially spaced around the translator and the outer surface of the translator includes the same number of axially-extending bearing surfaces. One or more bearings can be provided at both axial ends of the stator so that the translator is well supported.

### Drawings

Figure 1 is a perspective view through a tubular electrical machine according to the present invention with part of the tubular electrical machine shown in cut away;
Figure 2 is a perspective view of an annular ring of segment laminations that can be stacked on top of each other to form a stator for the tubular electrical machine of Figure 1;
Figure 3 is a perspective view of part of a stack of annular rings of Figure 2;
Figure 4 is a perspective view of part of a stack of batons that can be used to form an alternative stator for a tubular electrical machine which does not form part of the claimed invention;
Figure 5 is a side view of the stator of the tubular electrical machine of Figure 1;
Figure 6 is a side view of the translator of the tubular electrical machine of Figure 1;
Figure 7 is a schematic axial cross-section through the tubular electrical machine of Figure 1 when surrounded by sea water during operation as a direct drive generator for a wave energy machine; and
Figure 8 is a flux plot of an axial cross-section of the stator of the tubular electrical machine of Figure 1.

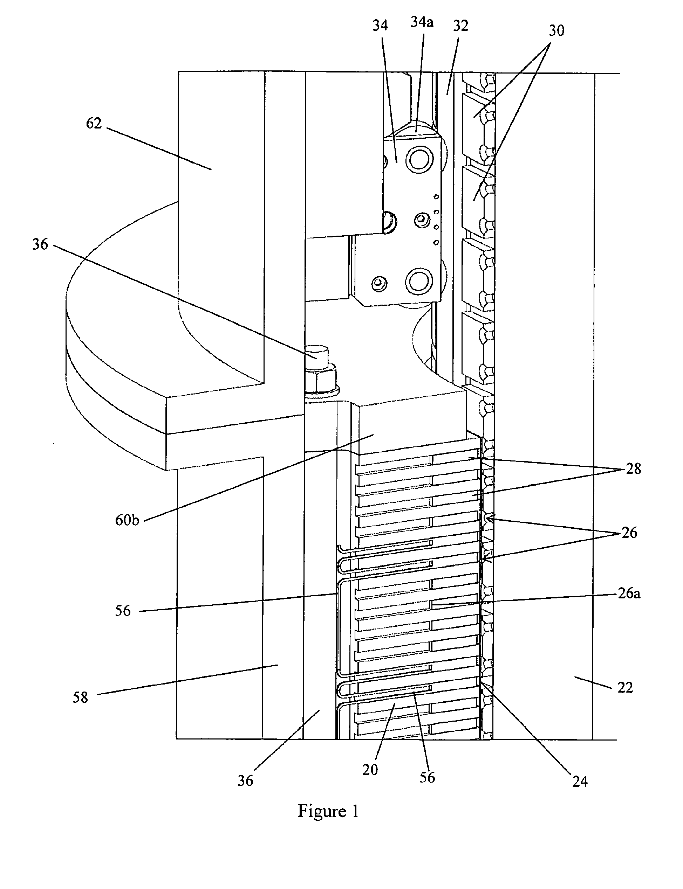

With reference to Figure 1, a three-phase tubular electrical machine according to the present invention includes a stator 20 and a translator 22. The stator 20 has a cylindrical inner surface 24 that includes a series of annular slots 26 for receiving a series of coils 28 that together form a stator winding.

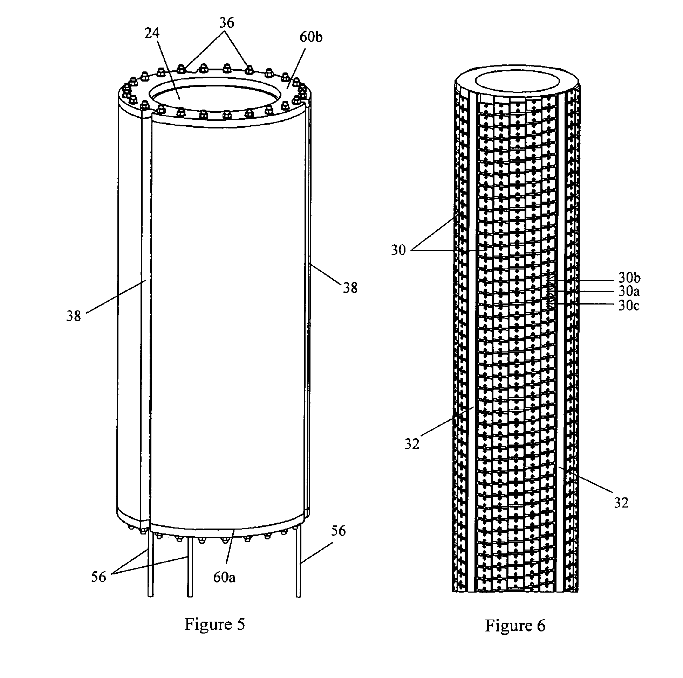

The translator 22 is formed in a number of individual sections that are mechanically attached together. The cylindrical outer surface of the translator 22 is covered by rows of permanent magnets 30. As shown most clearly in Figure 6, the permanent magnets are arranged in such a way that the magnets in each row are skewed or shifted slightly with respect to each other in the axial direction. The offset between neighbouring magnets reduces cogging forces. The magnets in each pair of axially adjacent rows have opposite polarity. For example, a row of magnets 30a might be N-pole and the axially adjacent rows of magnets 30b and 30c might be S-pole. Four steel strips 32 are provided on the outer surface of the translator 22 (only two are shown in Figure 6). The strips 32 act as bearing surfaces and cooperate with bearings 34 (Figure 1) to maintain a radial separation or air gap between the stator 20 and the translator 22.

Exemplary dimensions of the machine may be: stator, 4.75 m long, inner diameter about 1500 mm, outer diameter about 2000 mm; translator about 12 m long. The stator may have 36 poles.

With reference to Figures 1 to 3, the stator 20 is formed from annular laminations that are stacked on top of each other in the axial direction. Each annular lamination is made up of a number of planar radial segments 40 having a radially inner edge 42 and a radially outer edge 44. The lamination segments 40 are stamped from, e.g., 1.0 mm thick blanks of an electrical steel, coated with a thin film of insulating material, then butted together along their radial edges 46 to form the annular laminations; though as described later, gaps may be left between the radial edges of selected of the segments to accommodate electrical connections. A cutting or stamping process may be used to create a series of radially extending slits 48 in the radially inner edges of the lamination segments 40. The parts of each lamination segment 40 that extend radially between adjacent pairs of slits therefore take the form of a series of circumferentially-spaced fingers 50. This means that the assembled stator 20 is effectively "laminated" in the circumferential direction as well as in the axial direction.

Each lamination segment 40 is divided in the radial direction into a slotted region 40a and a support region 40b. A number of holes 52 are formed in the support region for receiving locking bolts 36. Certain of the lamination segments 40 also include cut-out regions 54 in their radially outer edges. These define axially-extending channels 38 in the cylindrical outer surface of the stator 20 as described below.

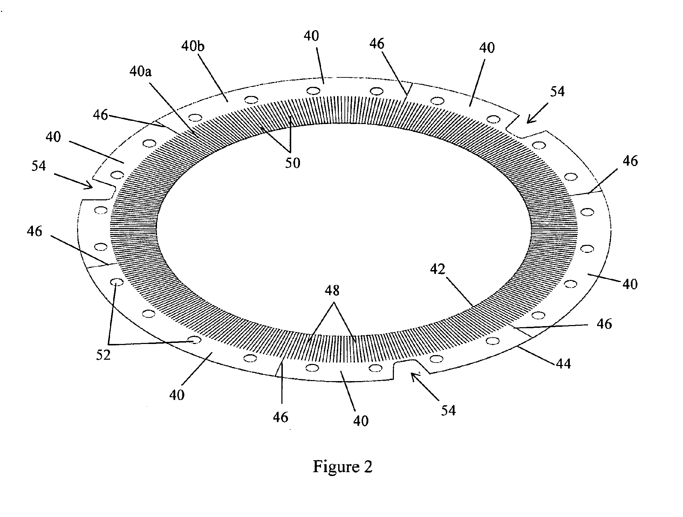

To assemble the stator 20, a first stainless steel clamp plate 60a (Figure 5) is positioned to form one end of the stator core around a central mandrel (not shown). A first set of lamination segments 40 (perhaps as shown in Figure 2) are positioned on top of the clamp plate 60a around the mandrel with their radial edges in abutment to form a first annular lamination. A second set of lamination segments is then positioned around the central mandrel on top of the first set of lamination segments to form a second annular lamination. The individual segments forming the second annular lamination are staggered in the circumferential direction relative to those forming the first annular lamination. This prevents the radial edges of the segments of axially successive annular laminations being axially aligned with each other and therefore improves the mechanical strength of the assembled stator. It will be appreciated that the second set of lamination segments will be different to the first set of lamination segments so that the holes 52 and the cut-out regions 54 of each successive annular lamination are axially aligned with each other. Further sets of lamination segments 40 are positioned around the central mandrel in the same way to form a first stack of annular laminations. The radially inner edges 42 of the lamination segments 40 of the first stack form part of the cylindrical inner surface 24 of the stator 20.

An annular slot 26 is formed in the stator by a second stack of annular laminations that is placed on top of the first stack. The annular laminations that make up the second stack are assembled as described above with sets of individual lamination segments 40' being positioned around the central mandrel. The only difference is that the lamination segments 40' in the second stack have a shorter radial length such that their radially inner edges 42' are recessed back relative to the cylindrical inner surface 24 of the stator 20 so that together they define a cylindrical outer end surface 26a of the slot 26. The radially outer edges 44' and the support regions of the lamination segments 40 and 40' in the first and second stacks are axially aligned with each other. The holes 52 and the cut-out regions 54 that form the channels 38 are also axially aligned.

The inner and outer diameters of the annular laminations that comprise the stacks of laminations will depend on the rating and frequency of the tubular electrical machine. For example, if the first stack that forms part of the cylindrical inner surface of the stator 20 has an inner diameter of 1500 mm, the segments 40' that make up the annular laminations of the second stack may have an inner diameter of about 1690 mm. In this case, the slits 48 may have a radial length of about 180 mm in the first stack and about 80 mm in the second stack. In both stacks, the outer diameters of the laminations and the circumferential widths of the slits may be between 1 and 3 mm, depending on how the slits are formed. The circumferential distance between each adjacent pair of slits 48 (and hence the circumferential width of the individual fingers 50) may be about 10 mm. The above difference between the inner diameters of the first and second stacks means that the slot 26 has a radial depth of about 95 mm. The first stack includes sufficient annular laminations so that the axial distance between the adjacent slots is about 20 mm. The second stack includes sufficient annular laminations so that the slot 26 has an axial height of about 18 mm.

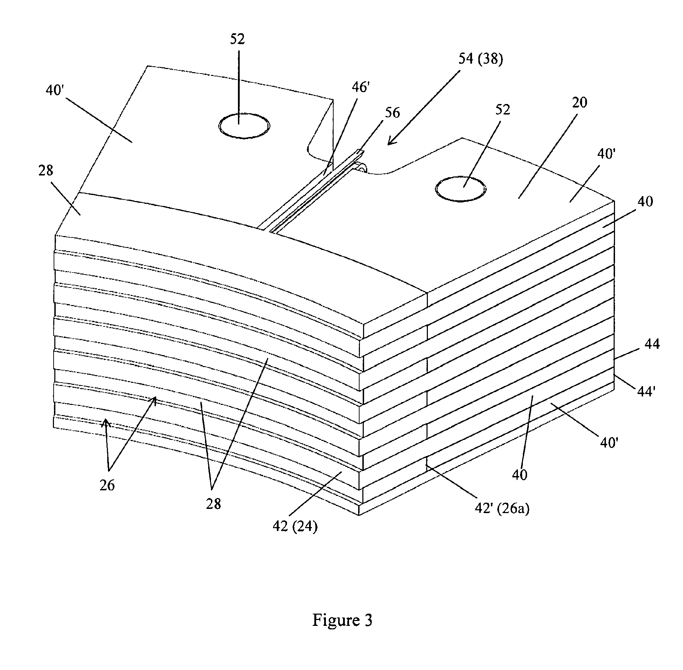

The annular laminations 40 and 40' forming each of the first and second stacks have not been individually identified in Figure 3 for clarity. However, it will be readily appreciated that each of the first and second stacks contains a number of axially-stacked annular laminations as described above.

A coil 28 of the stator winding is then positioned in the slot 26 and an annular ring of non-magnetic insulating material (not shown) is used to seal the opening of the slot 26. The insulating material also provides support for the parts of the fingers 50 that overhang the slot 26 and mechanically restrains them from being bent or flexed in the axial direction by the flux in the stator 20. Electrical connections 56 associated with the coil 28 are run out through a gap 46' provided between individual lamination segments 40' in the second stack. The gap is radially aligned with one of the axially-extending channels 38, which allow the coil connections 56 for each of the three-phases to be connected together in a known manner. Eventually, the coil connections are passed out of the protective casing 58 (Figure 1) that surrounds the stator 20 and to a junction unit.

Once all of the lamination segments have been positioned around the central mandrel to define a stator 20 having a series of axially-spaced slots 26, each slot containing a coil of the stator winding, a second stainless steel clamp plate 60b is placed on top of the stator to complete the wound corepack. Bolts 36 are passed though the clamp plates 60a and 60b and the holes 52 in the support regions 40b of the lamination segments and fastened to mechanically clamp the stacks together. The assembled stator 20 is then placed inside a sealed tank (not shown) where it undergoes a Vacuum Pressure Impregnation (VPI) process in which a vacuum is created inside the tank and resin is pumped into the gaps between the individual lamination segments and the fingers. The stator is then cured at 180° C for a period of time to set the resin and bond the lamination segments together.

The assembled stator is placed inside a protective casing 58 having good thermal conductivity properties. Upper and lower casings (only the upper casing 62 is shown in Figure 1) are then secured to the flanges provided at the axial ends of the protective casing 58 to protect and contain the translator 22. A series of four circumferentially-spaced bearings 34 (only one of which is shown in Figure 1) are mounted around the translator 22 inside the upper and lower casings. The bearings 34 include rotatably mounted rollers 34a that run along the steel strips 32 provided on the outer surface of the translator 22.

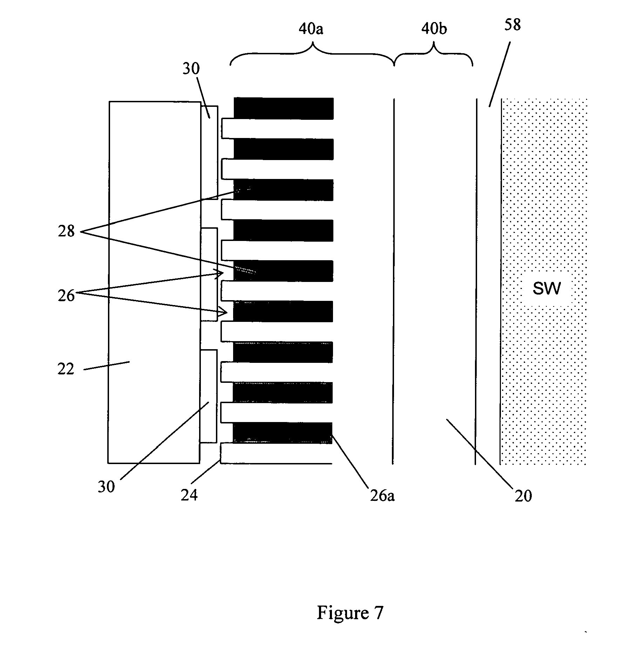

The tubular electrical machine can be used as a direct drive generator for a wave energy machine. In this case, the translator 22 can be connected to a part of the wave energy machine that undergoes reciprocal movement and the stator 20 can be connected to a stationary part so that relative movement between the two parts of the wave energy machine will induce an electrical current in the stator winding. The casing of the tubular electrical machine can be surrounded with sea water SW as shown schematically in Figure 7. The part of the casing 58 surrounding the stator 20 has good thermal conductivity so any heat generated in the lamination segments 40 can be conducted straight out through the casing to the sea water. This removes the need for any other cooling source within the stator 20 itself because the sea water essentially acts as an infinite heat sink. The slits 48 in the radially inner edges of the lamination segments do not present a barrier or hindrance to the conduction of the heat out of the fingers 50 because they extend along a radius of the lamination segments.

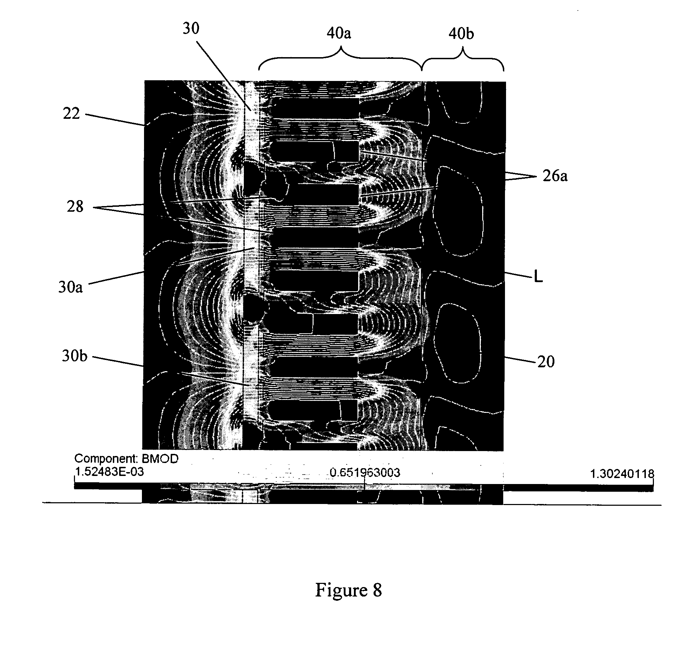

The operation of the tubular electrical machine will now be briefly explained with reference to Figure 8, which is a flux plot showing the flux flowing through the stator 20. The flux is produced by the permanent magnets 30 mounted on the outer surface of the translator and the flux lines extend between one row of magnets (say the N-pole row 30a) and an adjacent row of magnets (say the S-pole row 30b). The flux flows radially out from the N-pole row 30a across the air gap and through certain of the lamination segments before flowing axially though the lamination segments and then radially back to the S-pole row 30b through different lamination segments. The flux therefore interacts with the coils 28 of the stator winding and the relative movement between the translator 22 and the stator 20 produces a changing flux that induces an electrical current in the stator winding. Eddy currents circulate in the circumferential direction but they are restricted in the slotted region 40a of the lamination segments because they can only circulate in the individual fingers 50 rather than in the lamination segments as a whole. The line L dividing the lamination segments into the slotted region 40a and the support region 40b is clearly shown in Figure 8. It can be seen that the position of the line L has been carefully selected so that the majority of the flux (high levels of flux density are represented by lighter areas and low levels of flux density are represented by darker areas) is contained to the left of the line or within the slotted region 40a. The small amount of flux flowing in the support region 40b means that the eddy current losses here are not significant. The radial length of the slits 48 can therefore be selected so that the slits are only provided in the region of the lamination segments that carries the majority of the flux.

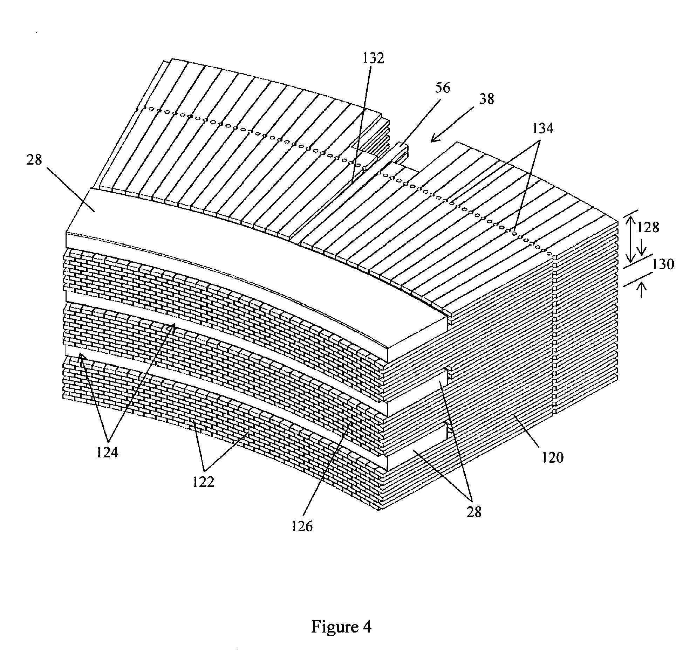

Part of an alternative stator 120 for a tubular electrical machine that does not form part of the claimed invention is shown in Figure 4. The stator 120 is formed from a large number of batons 122 that are formed as radial segments and stacked together in layers around a central mandrel (not shown) with their radial edges in abutment as far as is feasible in the assembly process. There may in fact be small gaps (say, up to 0.5 mm) between the radially extending edges of nominally abutting batons, but such gaps will be filled with impregnating resin during the VPI process described above. As was the case for the lamination segments of the preceding embodiment, the batons are given a thin coat of insulating material before assembly into the stator. The batons 122 are stamped out from blanks of electrical grade steel (typically between 1 and 2 mm thick) in the same way as the lamination segments described above. The batons 122 have different radial lengths so that slots 124 can be formed in the substantially cylindrical inner surface 126 of the stator. More particularly, the stator can be formed from first stacks 128 of batons 122 having a first radial length and second stacks 130 of batons having a second radial length that is less than the first radial length. Some batons can be sized to define the axially-extending channels 38 in the cylindrical outer surface of the stator 120.

The coils 28 of the stator winding are then positioned in the slots 124. Electrical connections 56 associated with the coils 28 are run out through gaps 132 provided by omitting one or more batons out of the second stack. The gaps are radially aligned with one of the axially-extending channels 38. Eventually, the coil connections 56 are passed out of the protective casing 58 (Figure 1) that surrounds the stator 120 and to a junction unit.

The size of each baton 122 is chosen such that the eddy currents circulating in each baton, and hence the overall eddy current losses of the stator 120, are within predetermined limits. For a stator 120 having an inner diameter of about 1500 mm and an outer diameter of about 2000 mm, a typical value for the circumferential width of the radially inner and outer edges of each baton might be about 12 mm and 16 mm, respectively.

The batons 122 are assembled together using a series of insulated pins 134 which lock and position the batons to help form a rigid stator. The assembled stator is subjected to a VPI process as described above.

The embodiments of the stator represented by Figures 2 and 4 respectively have included axially extending channels 54, 38 in the outer surface of the stator core to accommodate the connections to the coils of the stator winding. To simplify and reduce the costs of assembly of the stator core and manufacture of the lamination segments 40, 40', or batons 122, channels 54, 38 may be omitted and the electrical connections to the coils may be located in a terminal box fabricated in a stator casing or frame surrounding the core. This reduces the number of different types of laminations or batons required to build the stator core. However, the gaps 46' or 132 between selected of the lamination segments 40' or batons 122, respectively, would still be needed to allow the connections to exit radially from the coil slots 26 or 126.

## Claims

1. A stator (20) for a tubular electrical machine having a substantially cylindrical inner surface (24) containing a series of axially-spaced slots (26) for receiving the coils (28) of a stator winding, wherein the stator (20) comprises axially successive laminations (40; 40') stacked together such that radially inner edges (42; 42') of the laminations (40; 40') define the slots (26) and the inner surface of the stator (24), the laminations (40; 40') comprising circumferentially-spaced fingers (50) extending radially outwardly from the radially inner edges (42; 42') of the laminations (40; 40').

2. A stator (20) according to claim 1, wherein at least the laminations (40; 40') constituting the region of the stator (20) containing the stator winding comprise the circumferentially spaced fingers (50).

3. A stator (20) according to any preceding claim, wherein the stator (20) includes an outer surface that is substantially cylindrical.

4. A stator (20) according to any preceding claim, wherein the stator (20) is formed from annular laminations (40; 40') having a radially inner edge (42; 42') and a radially outer edge (44; 44').

5. A stator (20) according to claim 4, wherein the annular laminations comprise a plurality of segments (40; 40') abutted together along their radial edges (46).

6. A stator (20) according to claim 5, wherein the annular laminations are stacked such that axially adjacent segments (40; 40') are staggered in the circumferential direction with respect to each other.

7. A stator (20) according to any of claims 4 to 6, wherein the stator (20) is formed from a first set of stacks of annular laminations (40) having a first radial length such that their radially inner edges (42) together define the substantially cylindrical inner surface (24) of the stator (20) and a second set of stacks of annular laminations (40') having a second radial length that is less than the first radial length such that their radially inner edges (42') define radially inner surfaces (26a) of the axially-spaced slots (26) for receiving the coils (28) of the stator winding.

8. A stator (20) according to any preceding claim, wherein cut-out regions or gaps (46') are formed in or between selected laminations to provide radially-extending passages for connections (56) to the stator winding.

9. A stator (20) according to claim 4, wherein the radially outer edges (44; 44') of selected laminations (40; 44') are provided with cut-out regions (54) to define at least one axially-extending channel (38) in an outer surface of the stator (20).

10. A stator (20) according to any preceding claim, wherein the laminations (40; 40') have a slotted region (40a) containing the circumferentially-spaced fingers (50) and a support region (40b) containing circumferentially-spaced apertures (52).

11. A tubular electrical machine including:
a stator (20) according to any preceding claim,
a stator winding having a series of coils (28) received in the series of axially-spaced slots (26) contained in the substantially cylindrical inner surface (24) of the stator (20), and
a translator (22) located inside the stator (20) and spaced apart from the substantially cylindrical inner surface (24) of the stator (20) by an air gap.

12. A tubular electrical machine according to claim 11, wherein the translator (22) includes rows of permanent magnets (30) on its outer surface.

13. A tubular electrical machine according to claim 12, wherein the permanent magnets (30) are arranged in axial rows of alternating polarity.

14. A tubular electrical machine according to claim 13, wherein each of the permanent magnets (30) forming a complete row of magnets is shifted slightly with respect to each other in the axial direction.

15. A tubular electrical machine according to any of claims 12 to 14, wherein the permanent magnets (30) comprise the inner profile of the air gap.

16. A method of manufacturing a stator (20) for a tubular electrical machine comprising the steps of:
positioning a first clamp plate (60a) to form one end of a stator core;
producing first annular laminations (40) comprising circumferentially spaced fingers (50) that extend radially outwardly from an inner edge (42) of the first laminations (40) and second annular laminations (40') comprising circumferentially spaced fingers (50) that extend radially outwards from an inner edge (42') of the second laminations, the second laminations (40') having a shorter radial length than the first laminations (40);
alternately stacking a plurality of the first laminations (40) and a plurality of the second laminations (40') around a central mandrel to form a stator core having a substantially cylindrical inner surface (24) defined by the inner edges (42) of the first laminations (40) and where the inner edges (42') of the second laminations (40') are recessed back relative to the substantially cylindrical inner surface (24) to define a series of axially-spaced slots (26) for receiving the coils (28) of a stator winding;
inserting a coil (28) of the stator winding into an associated one of the axially-spaced slots (26) as the first and second laminations (40; 40') are stacked in the axial direction;
positioning a second clamp plate (60b) to form an opposite end of the stator core; and
mechanically compressing the stacks of first and second laminations (40; 40') between the first and second clamp plates (60a;60b).

17. A method according to claim 16, further comprising the step of subjecting the clamped stator core to a vacuum pressure impregnation (VPI) process.
